# EUROPEAN PATENT SPECIFICATION

(11) **EP 4 198 201 B1**
(45) Date of publication and mention of the grant of the patent: **24.07.2024**
(21) Application number: 21214268.1
(22) Date of filing: 14.12.2021
(51) Int. Cl.: E01C 19/48

(54) **METHOD FOR CONTROLLING AN ACTUAL POWER OUTPUT FROM A SCREED HEATING CONTROL DEVICE FOR HEATING A SCREED DEVICE OF A PAVER, CONTROL UNIT, COMPUTER PROGRAM, COMPUTER READABLE MEDIUM, SCREED HEATING CONTROL DEVICE FOR CONTROLLING AN ACTUAL POWER OUTPUT FOR HEATING A SCREED DEVICE OF A PAVER, AND PAVER**
VERFAHREN ZUR STEUERUNG DER NENNLEISTUNG EINER HEIZUNGSSTEUERUNGSVORRICHTUNG ZUM HEIZEN EINER EINBAUBOHLENVORRICHTUNG, STEUEREINHEIT, COMPUTERPROGRAMM, COMPUTERLESBARES MEDIUM, HEIZUNGSSTEUERUNGSVORRICHTUNG ZUR STEUERUNG DER NENNLEISTUNG ZUM HEIZEN EINER EINBAUBOHLENVORRICHTUNG UND EINBAUBOHLE
PROCÉDÉ DE COMMANDE D'UNE PUISSANCE DE SORTIE RÉELLE D'UN DISPOSITIF DE COMMANDE DE CHAUFFAGE DE CHAPE POUR CHAUFFER UN DISPOSITIF DE CHAPE D'UN FINISSEUR, UNITÉ DE COMMANDE, PROGRAMME INFORMATIQUE, SUPPORT LISIBLE PAR ORDINATEUR, DISPOSITIF DE COMMANDE DE CHAUFFAGE DE CHAPE POUR COMMANDER UNE PUISSANCE DE SORTIE RÉELLE POUR CHAUFFER UN DISPOSITIF DE CHAPE D'UN FINISSEUR ET FINISSEUR

(43) Date of publication of application: 21.06.2023
(73) Proprietor: Volvo Construction Equipment AB, 631 85 Eskilstuna (SE)
(72) Inventor: Lindemann, Henrik, 31582 Nienburg (DE); Mahler, Anton, 30974 Wennigsen (DE); Ebbighausen, Dennis, 31785 Hameln (DE); Kappel, Marc, 31787 Hameln (DE)
(74) Representative: Eisenführ Speiser

(56) References cited:
- US-A1- 2009 257 825
- US-A1- 2018 282 952

## Description

### TECHNICAL FIELD

The invention relates to a method for controlling an actual power output from a screed heating control device for heating a screed device of a paver, a control unit, a computer program, a computer readable medium, a screed heating control device for controlling an actual power output for heating a screed device of a paver and a paver.

The invention can be applied in heavy-duty vehicles, such as pavers and construction equipment. Although the invention will be described with respect to a paver, the invention is not restricted to this particular vehicle, but may also be used in other vehicles and construction equipment.

### BACKGROUND

There is a growing need for sufficient power supply of pavers, in particular for (pre-)heating the screed device of pavers. (Pre-)Heating screed devices requires a lot of power. It is known to control the screed power adjustment by changing the electrical voltage. This is easily possible because the electrical power comes directly from the pavers own generator.

Further, engines of pavers need to run in order to (pre-)heat screed device of pavers. However, there is a need to reduce such engine idle times to minimize pollution. Furthermore, there is a need for noise reduction. Both is in particular required when the paver is used in cities.

CN 106 677 015 A discloses a paver with a preheating function and an operation method thereof, wherein heating is performed by utilizing hot waste gas so that energy reutilization is achieved, and energy can be saved.

US 2009/0257825 A1 relates to a control system for heating a screed assembly of a paving machine to sequentially and automatically energize fewer than all of the plurality of resistive heating elements at a time to achieve a predetermined screed plate temperature utilizing a 24V DC power supply. This prevents heating the entire screed plate or several screed plates simultaneously in order to prevent draining the power supply, which is used for other functions, such as lighting, of the paving machine.

EP 1 757 734 B1 relates to an electric heater for road finisher which can be repaired with less effort and more quickly. This is achieved by providing a releasable electrical connection for the connecting line on a laying route to a distributor in a region of a heating body outlet.

WO 00/47822 A1 relates to an automatic heating system for a screed assembly of a paving vehicle having a control system that is connected with the screed assembly and electrically connected with the heater and is configured to automatically adjust current flow through the heating element so as to regulate the temperature of the screed plate.

The prior art has several disadvantageous. There is a need for improvements in the field of heating screed devices of pavers.

### SUMMARY

An object of the invention is to provide a method, a control unit, a computer program, a computer readable medium, a screed heating control device and a paver to overcome the disadvantageous of the prior art. In particular, an object of the invention is to provide a method, a control unit, a computer program, a computer readable medium, a screed heating control device and a paver to improve the heating of the screed device. In particular, an object of the invention is to provide a method, a control unit, a computer program, a computer readable medium, a screed heating control device and a paver to enable (pre-heating of the screed device with reduced pollution and minimized noise emission.

According to a first aspect of the invention, the object is achieved by a method according to claim 1. In particular, the object is achieved by a method for controlling an actual power output from a screed heating control device for heating a screed device of a paver. Here, preferably, the term "power" is to be understood as electrical power or electrical energy.

The paver also known as road paver finisher, asphalt finisher, or road paving machine, is a vehicle or construction equipment to provide a road surface or crust for building a road or alike on a ground. The road surface or crust is made of material such as some kind of asphalt or concrete. The paver provides material on the ground and compacts it. Usually, the material is provided flat on the ground with slight compaction by means of the screed device. Usually, after the paver has laid out the material on the ground, a roller compacts the provided material further. Preferably, such a paver comprises a heating device that heats the screed device of the paver for building a road surface or crust. Preferably, the heating device may comprise one or more heating units for heating the screed device, in particular for heating one or more screed units of the screed device. Preferably, the paver or the screed device itself may comprise a heating device for heating the screed device.

The invention is based on the findings of the inventors that it is easy to control heating the screed device, i.e. a power output provided for heating, if the paver itself provides the power to heat the screed device; however, if the power for heating is provided via a remote electrical power source the control of the power output provided for heating the screed device is more complex. In particular, if the power for heating is provided via a remote electrical power source and is fixed, there is a need to limit the power consumption on the side of the screed device. It is known to the inventors that a DC-converter could be used to supply the screed device with DC. However, this workaround is disproportionately expensive.

The heating of the screed device is improved and the disadvantageous of the prior art are overcome by means of the method and screed heating control device described herein.

The screed heating control device comprises a power input connector device that is configured to be connected to a remote electrical power source. In particular, the remote electrical power source is not a power source, such as a generator, on-board on a paver.

Preferably, the power input connector device could comprise one or more power input connector units. The power input connector device, in particular the one or more power input connector units, may be an electrical plug and/or an electrical socket. In particular, the power input connector device, in particular the one or more power input connector units, are configured to be connected to an alternating current (AC) or a direct current (DC) remote electrical power source. Most preferably, the power input connector device, in particular the one or more power input connector units, is configured to transmit a three-phase current. Preferably, the power input connector device, in particular the one or more power input connector units, is an electrical plug and/or is an electrical socket or comprises an electrical plug and/or comprises an electrical socket. Preferably, the power input connector device, in particular the one or more power input connector units, are electrical connectors harmonized according to the Commission on the Rules for the Approval of the Electrical Equipment (CEE).

A car charging infrastructure, generators or other electrical power sources like power grid or battery packs, or alike can be understood as remote electrical power source. Further, preferably, an electric truck, for example an electric truck that delivers material to the paver, may function as remote electrical power source that provides a power input for heating a screed device. Preferably, the remote electrical power source provides a three-phase alternating current or a direct current. In particular, the remote electrical power source provides a current of for example 10 to 20 ampere, in particular 16 ampere. Further, preferably, the remote electrical power source may provide a current of around 32 ampere or around 63 ampere. It may also be preferred that the remote electrical power source provides at least 230 volt. In particular, it is preferred that the remote electrical power source provides at least 400 volt.

Preferably, the power input connector device and the remote electrical power source are connected via a corresponding cable. In particular, while providing power from the remote electrical power source to the paver for heating of the screed device it is preferred that the cable connection between the power input connector device and the remote electrical power source cannot be disconnected. In particular, it is preferred that the cable connection between the power input connector device and the remote electrical power source cannot be disconnected mechanically. It is to be understood that the cable comprises an electrical plug and/or an electrical socket corresponding to the electrical plug and/or an electrical socket of the power input connector device and the remote electrical power source.

Further, the screed heating control device comprises a power output connector device that is configured to be connected to the paver, in particular the screed device of the paver. It is to be understood that the power provided to the screed heating control device may be distributed inside the paver directly to the screed device via the power output connector device without having to connect the screed device directly to the screed heating control device.

Preferably, the power output connector device could comprise one or more power output connector units. The power output connector device, in particular the one or more power output connector units, may be an electrical plug and/or an electrical socket. In particular, the power output connector device, in particular the one or more power output connector units, are configured to be connected to an alternating current (AC) or a direct current (DC) remote electrical power source. Most preferably, the power output connector device, in particular the one or more power output connector units, is configured to transmit a three-phase current. Preferably, the power output connector device, in particular the one or more power output connector units, is an electrical plug and/or is an electrical socket or comprises an electrical plug and/or comprises an electrical socket. Preferably, the power output connector device, in particular the one or more power output connector units, are electrical connectors harmonized according to the Commission on the Rules for the Approval of the Electrical Equipment (CEE).

Preferably, the power output connector device and the paver are connected via a corresponding cable. In particular, while providing power from the remote electrical power source to the paver for heating of the screed device it is preferred that the cable connection between the power output connector device and the paver cannot be disconnected. In particular, it is preferred that the cable connection between the power output connector device and the paver cannot be disconnected mechanically. It is to be understood that the cable comprises an electrical plug and/or an electrical socket corresponding to the electrical plug and/or an electrical socket of the power output connector device and the paver.

Preferably, the power input connector device, in particular the one or more power input connector units, and/or the power output connector device, in particular the one or more power output connector units, are configured according to IEC 61851-1 and/or according to IEC 61851-24. In particular, it may be preferred that the remote electrical power source is configured according to IEC 61851-1 and/or according to IEC 61851-24. Further preferably, the paver, in particular the screed device, is configured according to IEC 61851-1 and/or according to IEC 61851-24. Preferably, the communication between power input connector device and/or the power output connector device and/or the remote electrical power source and/or the paver, in particular the screed device bi-directional. Further preferably, the communication between power input connector device and/or the power output connector device and/or the remote electrical power source and/or the paver, in particular the screed is standardized and/or automated.

For example, it may be preferred that it is automatically communicated which power is needed by the screed device. Further preferably, it may be automatically communicated which power the remote electrical powersource can offer. It may also preferred, additionally or alternatively, that it is manually identified which power is needed by the screed device and which power can be provided by the remote electrical power source. It may be preferred to switch between automatic communication of respective powers and manual detection of the respective powers.

Preferably, the screed device comprises one or more screed units. Preferably, the screed device comprises one or more paving tiles and/or one or more tamper or mashers. Preferably, in driving direction of the paver the screed device is arranged behind the material provided to build the road surface. In particular, in driving direction of the paver, a tamper is arranged before at least one paving tile. Preferably, in driving direction of the paver, at least two paving tiles are arranged behind a tamper. It is to be understood, that it may be preferred that each screed unit of the screed device may comprise at least one stamper and at least one paving tile.

A screed device may extend orthogonal to the driving direction of the paver with a width of at least 1m, 2m, 3m, 4m, 5m, 6m, 7m, 8m, 9m, 10m or more. In particular, the width of the screed device orthogonal to the driving direction of the paver may be adjusted in operation or before starting to build a road surface on the ground. Preferably, at least two or more screed units of the screed device are arranged next to each other orthogonal to the driving direction of the paver. In particular, each screed unit may comprise a width orthogonal to the driving direction of the paver of at least 0,5m, 1m, 1,5m, 2m or more. Further, in particular, each screed unit may have a maximum width orthogonal to the driving direction of the paver of 0,5m, 1m, 1,5m or 2m.

Usually, for heating the screed device, several heating circuits are provided. Preferably, for heating the screed device typically three or more heating circuits are provided. In particular, five heating circuits are provided for heating the screed device. Each heating circuit may use each of three electricity phases for a three-phase alternating current. Further preferably, each heating circuit can be switched on and off by an individual contactor. With more than three heating circuits a sequential control is possible.

Additionally, the screed heating control device comprises a power adjustment unit that is configured for controlling an actual power output provided at the power output connector device for heating the screed device by connecting and disconnecting the power output connector device and the power input connector device. Therefore, by means of the screed heating control device it is controlled whether the screed device of the paver is heated or not. In particular, by means of the screed heating control device it is controlled what power provided at the power input connector device is provided at the power output connector device for heating the screed device. The power adjustment unit is adapted to control actual power output provided at the power output connector device automatically or manually.

Further preferably, the screed heating control device may be adapted to control the power provided at the power output connector device depending on a desired power consumption and/or a desired heating temperature of the screed device and/or a detected heating temperature of an environment of the paver, depending on a desired heating start time and/or a desired heating finish time and/or a required heating duration. For example, if heating of the screed device is preferred to start to a desired time, a desired heating start time is set accordingly. If the heating start time is reached, the screed heating control device provides power at the power output connector device for heating the screed device. As further example, it may be preferred that heating of the screed device is preferred to end to a desired time. In this case a desired heating finish time is set accordingly. Thus, if the time reaches the desired heating finish time heating of the screed device is finished, i.e. the screed heating control device does not provide any further power at the output connector device for heating the screed device. If a desired heating duration is set, the screed device is only heated during that time, i.e. during that time the screed heating control device provides power at the output connector device for heating the screed device. If the desired heating duration is exceeded, the screed heating control device does not provide any further power at the output connector device for heating the screed device. Also, for example, if a desired heating temperature is set and a detected heating temperature is below the desired heating temperature the screed heating control device provides power at the output connector de-vice for heating the screed device. Once the detected heating temperature of the screed device exceeds the set desired heating temperature, the screed heating control device stops providing power at the output connector device for heating the screed device. The example regarding the heating temperature applies accordingly to the desired power consumption and a detected power consumption.

The method according to the invention comprises several steps.

One step of the method is determining a maximum power input available at the power input connector device provided by the remote electrical power source. Preferably, the maximum power input available at the power input connector device provided by the remote electrical power source is determined automatically. Preferably, the screed heating control device is configured to determine the maximum power input available at the power input connector device once the power input connector device is connected to the remote electrical power source. Preferably, the screed heating control device and the remote electrical power source are configured to communicate with each other according to IEC 61851-1 and/or according to IEC 61851-24. Additionally or alternatively, according to the inventors, it may be preferred that the maximum power input available at the power input connector device provided by the remote electrical power source is determined manually. For example the maximum input power provided at the power input connector device may be provided by tags, labels or alike provided on the remote electrical power source.

Another step of the method is determining a desired power output required at the power output connector device for heating the screed device of the paver. Preferably, the desired power output provided at the power output connector device is determined automatically. Preferably, the screed heating control device is configured to determine the desired power output provided at the power output connector device once the power output connector device is connected to the screed device. Preferably, the screed heating control device and the screed device are configured to communicate with each other according to IEC 61851-1 and/or according to IEC 61851-24. Additionally or alternatively, according to the inventors, it may also be preferred to determine the desired power output required at the power output connector device for heating the screed device of the paver manually. For example desired power output required at the power output connector device may be provided by tags, labels or alike provided on the paver, respectively the screed device, or in operating instructions.

Further, the method comprises the step of controlling the power adjustment unit to control the actual power output from the screed heating control device for heating the screed de-vice of the paver from the remote electrical power source depending on the determined maximum power input and depending on the determined desired power output.

The invention enables (pre-)heating by using a remote electrical power source such as a car charging infrastructure, other electrical power sources like grid or battery packs, or alike. Furthermore, the invention enables to control the (pre-)heating depending on the available power input provided the remote electrical power source. Thus, if insufficient power input is provided by the remote electrical power source for heating the screed device, the screed device may nevertheless be connected to the remote electrical power source to (pre-)heat the screed device. In particular, the (pre-)heating may start earlier as the (pre-heating of the screed device may take longer if insufficient power input is provided by the remote electrical power source for heating the screed device.

In particular, the present invention relates to a paver with a heated screed device powered by an on-board electrical source including an interface operable to receive electrical power from a remote electrical power source for (pre-)heating the screed device without using on-board power, the interface having the screed heating control device that controls power consumption of the screed heater according to the power output of the remote supply.

Thus, the method according to the invention and the respective screed heating control de-vice for heating a screed device of a paver are configured to control the power provided to the screed device for heating. Advantageously, the on-board power supply provided on pavers is not needed for the pre-heating of the screed devices. However, it may be required again for heating the screed devices during operation. In particular, electrical loads provided on the paver, such as ambient lights, air conditioning etc., may be used without restrictions while the screed device is being heated.

In general, the invention improves the heating of screed devices of pavers, where the power is provided by a remote electrical power source.

Further, this method allows also to use existing infrastructure for electrically charging vehicles. In particular, car charging infrastructure or batteries may be used to provide the necessary power for heating the screed device. This, minimizes engine idle time and, thus, minimizes pollution, i.e. minimizes pollution due to exhaust gases and noise of the engine.

By means of the screed heating control device, in particular the power adjustment unit, the power provided to the screed device can be controlled according to the power needed by the screed device. For example, the power provided to the screed device is controlled via the screed heating control device, in particular the power adjustment unit, if the desired heating power required by the screed device is larger than the power provided by the remote electrical power source. Also, for example, the power provided to the screed device is controlled via the screed heating control device, in particular the power adjustment unit, if the power provided by the remote electrical power source is less than the heating power required by the screed device; in this case the heating power demanded by the screed device needs to be reduced. The same applies if the cable is limited to transfer a certain electrical power, which is less than the heating power demanded by the screed device.

According to a preferred embodiment of the method, the actual power output provided at the power output connector device is equal or less to the maximum power input available at the power input connector device if the determined desired power output required at the power output connector device is equal or less to the determined maximum power input available at the power input connector device.

This preferred embodiment protects for overload of the paver and/or the screed device and/or the power adjustment unit and or the power input connector device and/orthe power output connector device.

Preferably according to another embodiment of the method, the actual power output provided at the power output connector device is equal to the determined desired power output if the determined desired power output required at the power output connector device is smaller than the determined maximum power input available at the power input connector device.

This preferred embodiment protects for overload of the paver and/or the screed device and/or the power adjustment unit and or the power input connector device and/orthe power output connector device.

According to a further embodiment of the method, the step of controlling the actual power output from the screed heating control device for heating the screed device comprises closing the power adjustment unit for connecting the power input connector device to the power output connector device, in particular for connecting the external electric power source to the screed device via the screed heating control device. If the power adjustment unit is closed, the power input connector device is electrically connected with the power output connector device. It is preferred that the power adjustment unit provides power from the power input connector device to the power output connector device when the power adjustment unit is closed. Thus, in the closed state of the power adjustment unit the remote electrical power source is electrically connected to the screed device.

Additionally or alternatively, the step of controlling the actual power output from the screed heating control device for heating the screed device comprises opening the power adjustment unit for disconnecting the power input connector device from the power output connector device, in particular for disconnecting the external electric power source from the screed device by means of the screed heating control device. If the power adjustment unit is opened, the power input connector device is electrically disconnected from the power output connector device. It is preferred that the power adjustment unit does not provide power from the power input connector device to the power output connector device when the power output connector device is opened. Thus, in the opened state of the power adjustment unit the remote electrical power source is electrically disconnected from the screed device.

When the power adjustment unit is switched between the opened state and the closed state, the power adjustment unit has the function of a switch that electrically connects and disconnects the power input connector device and the power output connector device.

Additionally or alternatively, the step of controlling the actual power output from the screed heating control device for heating the screed device comprises discrete or continuous adjustment of the power adjustment unit for discrete or continuous adjustment of the actual output power to be provided to the screed device.

In another preferred embodiment of the method, the power input connector device of the screed heating control device comprises one or more power input connector units, wherein the one or more power input connector units are configured to be connected to one or more remote electrical power sources.

This embodiment enables to connect several remote electrical power sources to a single screed heating control device. In particular, the screed heating control device is adapted to control the power output depending on the power input provided at several power input connector devices or power input connector units of a power input connector device.

In this preferred embodiment, additionally or alternatively, the power output connector de-vice of the screed heating control device comprises one or more power output connector units, wherein the one or more power output connector units are configured to be connected to one or more screed units of the screed device of the paver.

This embodiment enables to connect several screed devices or screed units of a screed device to a single screed heating control device. In particular, the screed heating control device is adapted to control the power output for several screed devices or several screed units of a screed device.

According to this preferred embodiment of the method, the step of controlling the actual power output from the screed heating control device for heating the screed device comprises closing the power adjustment unit for connecting the one or more power input connector units of the power input connector device to the one or more power output connector units of the power output connector device, in particular for connecting the external electric power source to the screed device via the screed heating control device.

Additionally or alternatively, the step of controlling the actual power output from the screed heating control device for heating the screed device comprises opening the power adjustment unit for disconnecting the one or more power input connector units of the power input connector device from the one or more power output connector units of the power output connector device, in particular for disconnecting the external electric power source from the screed device by means of the screed heating control device.

Additionally or alternatively, the step of controlling the actual power output from the screed heating control device for heating the screed device comprises discrete or continuous adjustment of the power adjustment unit for discrete or continuous adjustment of the actual output power to be provided to one or more screed units of the screed device.

In a further preferred embodiment of the method, the screed heating control device comprises a timer device and/or a temperature sensor and/or power consumption detector, wherein the screed heating control device is adapted to control the actual power output from the screed heating control device for heating the screed device of the paver from the remote electrical power source depending on
- a desired heating start time of the screed device, and/or
- a desired heating finish time of the screed device, and/or
- a desired heating duration of the screed device, and/or
- a desired heating temperature of the screed device, and/or
- a desired power consumption of the screed device,
wherein the step of closing the power adjustment unit is initiated if the desired heating start time is reached. If, for example, the desired heating temperature or the desired power consumption of the screed device is reached, no further power is provided to the screed device. Thus, the screed heating control device controls the power output provided accordingly.

Additionally or alternatively, the step of opening the power adjustment unit is initiated if the desired heating finish time and/or desired heating duration and/or desired heating temperature and/or desired power consumption is reached.

In a further preferred embodiment, the timer device comprises several timer units that are adapted to control the actual power output from the screed heating control device for heating the screed units of the screed device of the paver from the remote electrical power source depending on a desired heating start time of each screed unit of the screed device, and/or a desired heating finish time of each screed unit of the screed de-vice, and/or a desired heating duration of each screed unit of the screed device, wherein the step of closing the power adjustment unit is initiated with respect to the screed units of the screed device of which the desired heating time is reached, and/or wherein the step of opening the power adjustment unit is initiated with respect to the screed units of the screed device of which the desired heating finish time and/or desired heating duration is reached.

According to a second aspect of the invention, the object is achieved by a control unit according to claim 8. In particular, the object is achieved by a control unit for controlling an actual power output from a screed heating control device to a screed device of a paver from a remote electrical power source is configured to perform the steps of any of the embodiments of the method according to the first aspect of the invention.

As to the advantages, preferred embodiments and details of the control unit, reference is made to the corresponding aspect and embodiments of the method described above.

According to a third aspect of the invention, the object is achieved by a computer program according to claim 9. In particular, the object is achieved by a computer program, which comprises program code means for performing the steps of any of the embodiments of the method according to the first aspect of the invention when said program is run on the control unit according to the embodiment of the second aspect of the invention.

As to the advantages, preferred embodiments and details of the computer program, reference is made to the corresponding aspect and embodiments of the method described above.

According to a fourth aspect of the invention, the object is achieved by a computer readable medium according to claim 10. In particular, the object is achieved by a computer readable medium carrying a computer program comprising program code means for performing the steps of any of the embodiments of the method according to the first aspect of the invention when said program product is run on the control unit according to the embodiment of the second aspect of the invention.

As to the advantages, preferred embodiments and details of the computer readable medium, reference is made to the corresponding aspect and embodiments of the method described above.

According to a fifth aspect of the invention, the object is achieved by a screed heating control device according to claim 11. In particular, the object is achieved by a screed heating control device for controlling an actual power output for heating a screed device of a paver. The screed heating control device comprises a power input connector device that is configured to be connected to a remote electrical power source. Further, the screed heating control device comprises a power output connector device that is configured to be connected to the paver, in particular the screed device of the paver. Additionally, the screed heating control device comprises a power adjustment unit that is configured for controlling the actual power output for heating the screed device provided at the power output connector device by connecting and disconnecting the power output connector device and the power input connector device.

The screed heating control device has a control unit described above that is signal coupled with the power adjustment unit.

Additionally or alternatively, the screed heating control device comprises a timer device that is adapted to control the actual power output from the screed heating control device for heating the screed device of the paver from the remote electrical power source. The actual power output from the screed heating control device for heating the screed device of the paver from the remote electrical power source is controlled depending on a desired heating start time of the screed device, and/or a desired heating finish time of the screed device, and/or a desired heating duration of the screed device.

As to the advantages, preferred embodiments and details of the screed heating control device, reference is made to the corresponding aspect and embodiments of the method described above.

In a preferred embodiment of the screed heating control device, the power adjustment unit comprises a thyristor unit, wherein preferably the thyristor unit comprises two thyristors connected in parallel, wherein further preferably the two thyristors are connected antiparallel and/or a TRIAC-unit. Preferably, it is provided that the thyristor unit controls the amperage based on current measurement and/or resistance measurement. This requires that the quantity of heating units implemented or used in operation is known. In particular, by means of the thyristor unit amperage and phase of the power provided to the screed device for heating can be controlled. For example, the thyristor unit may control the amperage depending on a current measurement or a resistance measurement if the quantity of screed device or the quantity of screed units implemented is known.

Preferably, the thyristor unit is connected in series to the screed device, in particular a heating element of the screed device. Such a connection of the thyristor unit is connected in series to the screed device represents an electric circuit. It is to be understood that, preferably, such an electric circuit is necessary for each phases for a three-phase alternating current.

In a further preferred embodiment of the screed heating control device, the power adjustment unit comprises an inductance unit, wherein preferably the inductance unit is connected in series with the thyristor unit, wherein further preferably the inductance unit is arranged between the power input connector device and the thyristor unit. In particular, by means of the inductance unit, the stability of the power network can be controlled.

In another preferred embodiment of the screed heating control device, the screed heating control device comprises a remote electrical power source, wherein preferably the remote electrical power source is connected to the power input connector device.

In a further preferred embodiment of the screed heating control device, the control unit is signal coupled with the screed device and/or the remote electrical power source.

Preferably the control unit is configured to communicate, in particular bi-directional communicate, with the screed device and/or the remote electrical power source to control the actual power output for heating the screed device.

In particular, the control unit is configured to determine a maximum power input available at the power input connector device provided by the remote electrical power source, and to determine a desired power output required at the power output connector device for heating the screed device of the paver.

According to a further preferred embodiment, the screed heating control device comprises at least one temperature sensor to detect a current temperature of the screed device. In particular, the screed heating control device comprises at least one temperature sensor to detect a current temperature of the screed units of the screed device.

Additionally or alternatively, the screed heating control device comprises power consumption detector to detect a current power consumption of the screed device. In particular, the screed heating control device comprises power consumption detector to detect a current power consumption of the screed units of the screed device.

According to a sixth aspect of the invention, the object is achieved by a paver according to claim 17. In particular, the object is achieved by a paver that comprises a screed heating control device described above that is configured for heating a screed device of a paver, and the screed device that is coupled to the screed heating control device.

As to the advantages, preferred embodiments and details of the paver, reference is made to the corresponding aspect and embodiments of the method described above.

In a preferred embodiment the paver comprises a remote electrical power source. Additionally or alternatively, the screed device comprises a screed element and a heating element to heat the screed element depending on the actual power output.

In a further preferred embodiment the power input connector device of the screed heating control device is connected to the remote electrical power source and/or the power output connector device of the screed heating control device is connected to the screed device.

In another preferred embodiment of the paver the screed heating control device and the remote electrical power source and/or the screed heating control device and the paver are electrically coupled via one or more cables for heating the screed device of the paver, wherein the coupling between the cables and the screed heating control device and/or the remote electrical power source and/or paver is locked while heating the screed device, in particular one or more of the screed units, of the paver, and/or while heating the screed device, in particular one or more of the screed units, the paver is adapted to inhibit driving of the paver and/orthe paver is adapted to provide signals, in particular visual and/or acoustical signals, indicating that the screed device is being heated.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
- Fig. 1: is a schematic three-dimensional view of a paver;
- Fig. 2: is a schematic block diagram of a screed heating control device in one preferred embodiment;
- Fig. 3: is a schematic block diagram of a screed heating control device in another preferred embodiment based on the embodiment shown in figure 2;
- Fig. 4: is a schematic block diagram of a screed heating control device in a further preferred embodiment based on the embodiment shown in figure 2;
- Fig. 5: is a schematic block diagram of a screed heating control device in yet a further preferred embodiment;
- Fig. 6: is a schematic block diagram of a screed heating control device in another preferred embodiment; and
- Fig. 7: is a schematic block diagram of the method in a preferred embodiment.

### DETAILED DESCRIPTION OF EXAMPLE EMBODIMENTS OF THE INVENTION

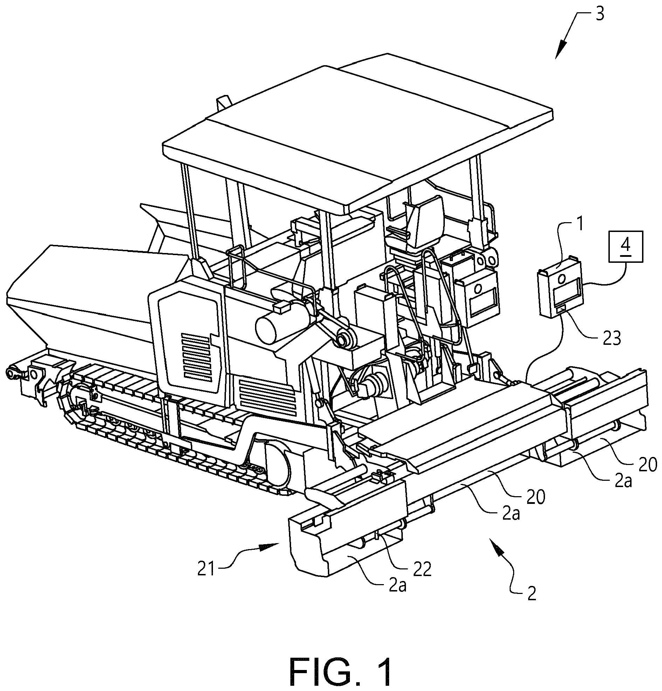

Figure 1 is a schematic three-dimensional view of a paver 3. The paver 3 comprises a screed device 2 and a screed heating control device 1 that is coupled to the screed device 2 and configured for heating the screed device 2. As can be seen, the screed heating control device 1 is electrically connected to a remote electrical power source 4.

The screed device 2 of the paver 3 comprises several screed units 2a. Each of the screed units 2a of the screed device 2 comprises a screed element 20 and a heating element 21 for heating the screed element 20 of the screed unit 2a depending on the actual power output provided by means of the screed heating control device 1.

The screed heating control device 1 is connected to the remote electrical power source 4. This allows for providing the necessary power output required for heating the screed device 2. Accordingly, the screed heating control device 1 is connected to the screed device 2 of the paver 3 to provide the necessary power provided for heating. The screed heating control device 1 is electrically coupled via one cable to the remote electrical power source 4 and electrically coupled via another cable or several cables to the screed device 2, respectively via several other cables to the screed units 2a of the screed device 2. Accordingly, it is to be understood that the coupling between the cable and the screed heating control device 1 and the remote electrical power source 4 is locked while heating the screed device 2. However, it is to be understood that the coupling between the cable and the screed heating control device 1 and the remote electrical power source 4 may also not be locked while heating the screed device 2 or the screed units 2a of the screed device 2 in some particular preferred embodiments.

On the contrary, while the screed device is not heated, the coupling between the cables and the screed heating control device 1 as well as the screed device 2 and of the coupling between the cable and the screed heating control device 1 and the remote electrical power source 4 is not locked. Thus, the cables may be disconnected from the screed heating control device 1 and the screed device 2 and the remote electrical power source 4 if the screed device is not heated.

Furthermore, while the screed device 2 is being heated, the paver 3 is adapted to inhibit driving of the paver 3. Furthermore, it may be preferred, while the screed device 2 is being heated, that the paver 3 is adapted to provide signals, in particular visual and acoustical signals, indicating that the screed device 2 is being heated.

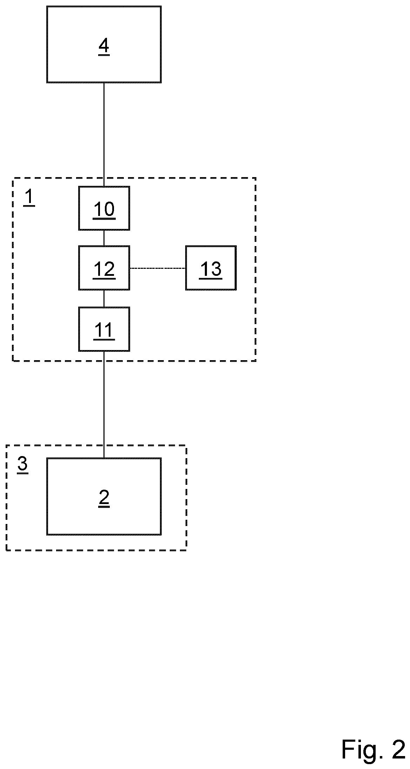

Figure 2 is a schematic block diagram of a screed heating control device 1 in one preferred embodiment. The screed heating control device 1 is adapted for controlling an actual power output for heating a screed device 2 of a paver 3, such as described before. The screed heating control device 1 comprises a power input connector device 10 and a power output connector device 11. The power input connector device 10 is configured to be connected to a remote electrical power source 4 such as described before. The power output connector device 11 is configured to be connected to the paver 2, in particular to the screed device 2 of the paver 3. Furthermore, the screed heating control device 1 comprises a power adjustment unit 12. The power adjustment unit 12 is configured for controlling the actual power output for heating the screed device 2 provided at the power output connector device 11 by connecting and disconnecting the power output connector device 11 and the power input connector device 10. In this preferred embodiment, the screed heating control device 1 I comprises a timer device 13. The timer device 13 is adapted to control the actual power output provided at the power output connector device 11 of the screed heating control device 1 for heating the screed device 2 of the paver 3. The timer device 13 is adapted to control the actual power output depending on a desired heating start time of the screed device 2, and/or a desired heating finish time of the screed device 2, and/or a desired heating duration of the screed device 2.

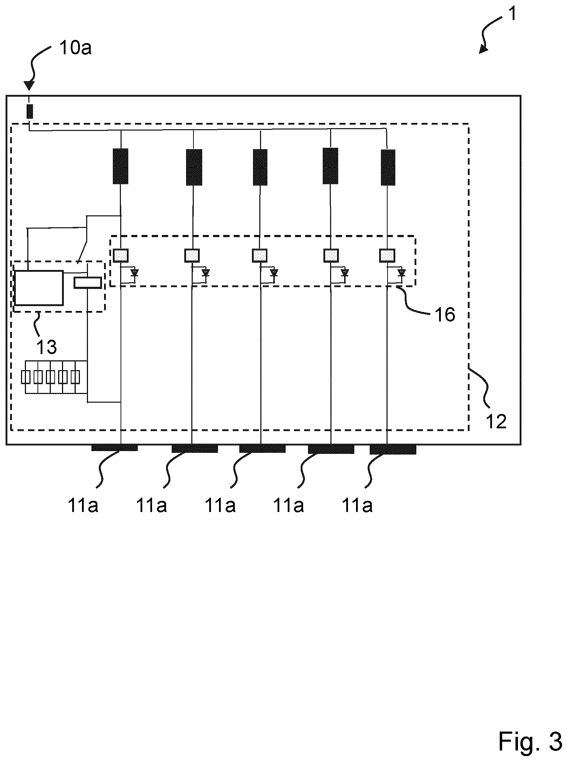

Figure 3 is a more detailed block diagram of a screed heating control device 1 in another preferred embodiment based on the embodiment shown in figure 2 described before. It can be seen that the screed heating control device 1 comprises a power input connector device 10 having one power input connector unit 10a and a power output connector device 11 having five power output connector units 11a. The one power input connector unit 10a is connected to the five power output connector units 11a via thyristors of a thyristor unit 16. By means of the thyristors of the thyristor unit 16 the actual power output provided for heating the screed device 2 can be controlled, for example depending on a measured current or resistance. It can be seen that in this preferred embodiment of the screed heating control device 1 it is preferred to control the power output provided at each five power output connector units 11a centralized by one timer device 13. Thus, for example, at each of the five power output connector units 11a a desired power output is provided for heating the screed units 2a starting at the same heating time and/or finishing at the same heating time.

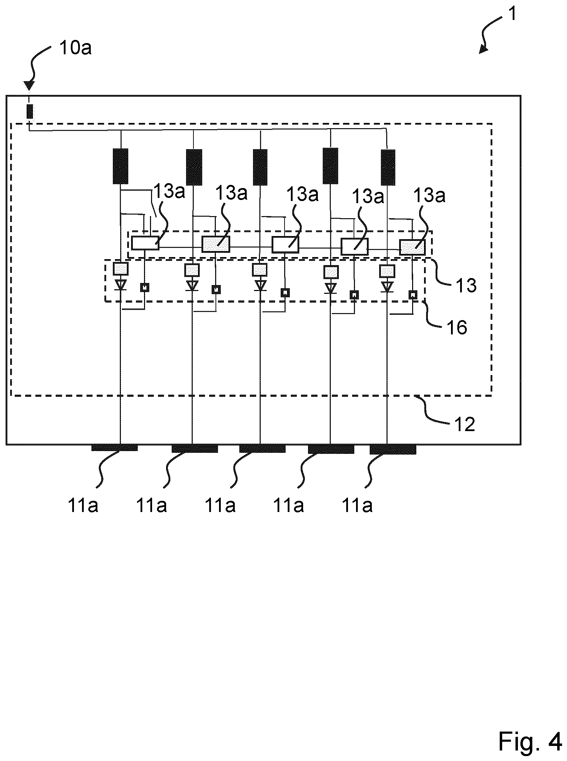

Figure 4 is a further detailed block diagram of a screed heating control device 1 in another preferred embodiment based on the embodiment shown in figure 2 described before. Contrary to the embodiment of the screed heating control device 1 shown in figure 3, the screed heating control device 1 shown in figure 4 comprises a timer device 13 having five timer units 13a. Each timer unit 13 is arranged in line between the power input connector unit 10a and the respective five power output connector units 11a. Thus, one timer unit 13a is assigned to each of the five power output connector units 11a to control the power output provided for heating the screed device accordingly. Thus, the five power output connector units 11a may be controlled independently from one another.

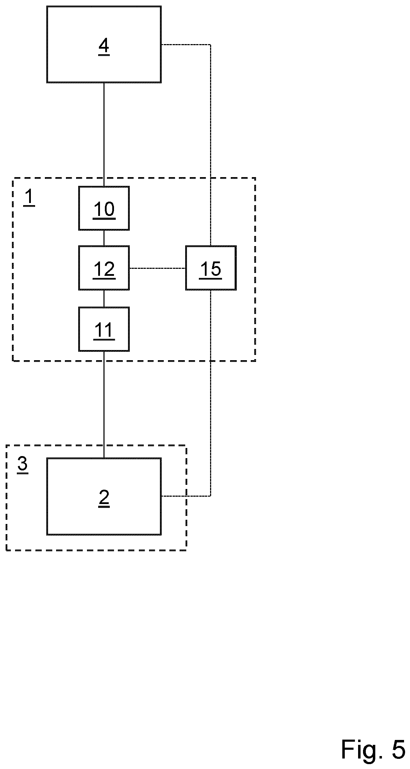

Figure 5 is a schematic block diagram of a screed heating control device 1 in yet a further preferred embodiment. The screed heating control device 1 shown in figure 5 is similar to the screed heating control device 1 shown in figure 2. It only differs in that the screed heating control device 1 shown in figure 5 comprises a control unit 15 instead of the timer device 13. It can be seen that the control unit 15 is signal coupled with the power adjustment unit 12. Furthermore, in this preferred embodiment, the control unit 15 is signal coupled with the screed device 2 and the remote electrical power source 4. Thereby, the control unit 15 is configured to communicate with the screed device 2 and the remote electrical power source 4 and the power adjustment unit 12. In particular, the control unit 15 is configured to determine a maximum power input available at the power input connector device 10 provided by the remote electrical power source 4. Further, the control unit 15 is configured to determine a desired power output required at the power output connector device 11 for heating the screed device 2 of the paver 3.

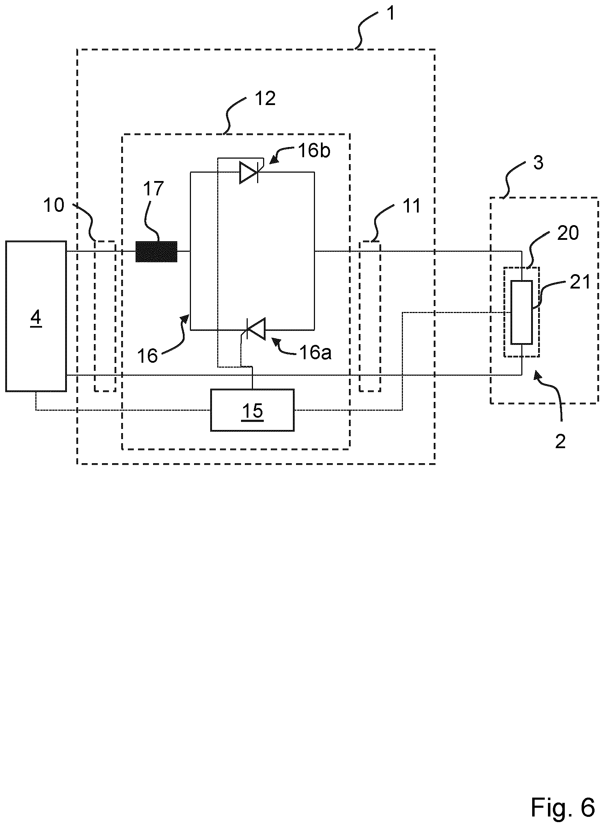

Figure 6 is a schematic block diagram of a screed heating control device 1 in yet another preferred embodiment. The screed heating control device 1 is connected to a remote electrical power source 4 via a power input connector device 10 and a screed device 2 of a paver 3 via power output connector device 11, wherein the screed device 2 comprises a screed element 20 that is being heated by a heating element 21. In this preferred embodiment, the power adjustment unit 12 of the screed heating control device 1 comprises a thyristor unit 16 having two thyristors 16a, 16b that are connected antiparallel. Further, between the power input connector device and the thyristor unit 16 a inductance unit 17 is arranged. The embodiment shown in figure 6 is based upon the embodiment of the screed heating control device 1 shown in figure 5. Thus, accordingly, the control unit 15 is signal coupled with the screed device 2, the remote electrical power source 4 and the power adjustment unit 12. The control unit 15 is signal coupled with the screed device 2 for determining a desired power output required at the power output connector device 11 for heating the screed device 2 of the paver 3. Further, the control unit 15 is signal coupled with the remote electrical power source 4 for determining a maximum power input available at the power input connector device 10 provided by the remote electrical power source 4. In particular, in this preferred embodiment, the control unit 15 is signal coupled with the thyristors 16a, 16b of the thyristor unit 16 to control the actual power output provided from the screed heating control device 1 for heating the screed device 2 of the paver 3 from the remote electrical power source 4 depending on the determined maximum power input and depending on the determined desired power output.

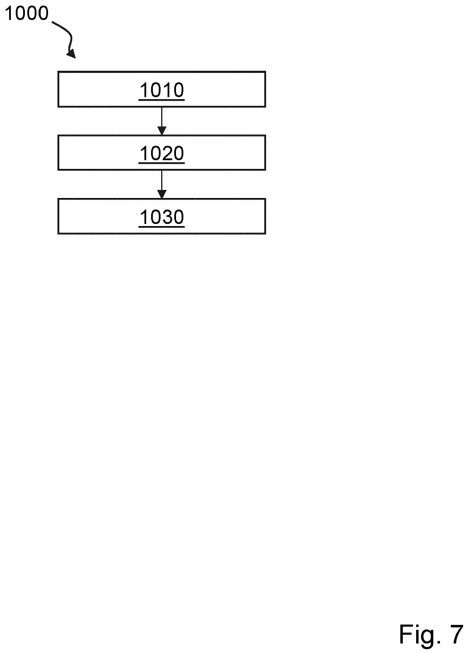

Figure 7 is a schematic block diagram of the method in a preferred embodiment. The method comprises three steps. One step of the method is determining 1010 a maximum power input available at the power input connector device 10 provided by the remote electrical power source 4. Another step of the method is determining 1020 a desired power output required at the power output connector device 11 for heating the screed device 2 of the paver 3. Yet another step of the method is controlling 1030 the power adjustment unit 12 to control the actual power output from the screed heating control device 1 for heating the screed device 2 of the paver 3 from the remote electrical power source 4 depending on the determined maximum power input and depending on the determined desired power output.

In the present embodiment disclosed, the step of controlling 1030 the actual power output from the screed heating control device 1 for heating the screed device 2 comprises a continuous adjustment of the power adjustment unit 12, i.e. for example of thyristors 16a, 16b of the thyristor unit 16 that are connected antiparallel for continuous adjustment of the actual output power to be provided to the screed device 2. It may be preferred that the screed heating control device 1 comprises at least one temperature sensor 22 - such as indicated in figure 1 - to allow detecting the temperature of the screed device 2. This enables the screed heating control device 1 to control the actual power output provided from the screed heating control device 1 for heating the screed device 2 of the paver depending on a set desired heating temperature of the screed device 2. Additionally, it may be preferred in this embodiment, to control the actual power output provided for heating the screed device 2 depending on a desired heating start time and/or a desired heating finish time of the screed device 2. It is to be understood that it may also be preferred to control the power output provided depending on a desired power consumption of the screed device 2.

### REFERENCE LIST

- 1: screed heating control device
- 2: screed device
- 2a: screed unit
- 3: paver
- 4: remote electrical power source
- 10: power input connector device
- 10a: power input connector unit
- 11: power output connector device
- 11a: power output connector unit
- 12: power adjustment unit
- 13: timer device
- 13a: timer unit
- 15: control unit
- 16: thyristor unit
- 16a,b: thyristors
- 17: inductance unit
- 20: screed element
- 21: heating element
- 22: temperature sensor
- 23: power consumption detector

## Claims

1. A method (1000) for controlling an actual power output from a screed heating control device (1) for heating a screed device (2) of a paver (3),
the screed heating control device (1) comprising:
- a power input connector device (10) that is configured to be connected to a remote electrical power source (4),
- a power output connector device (11) that is configured to be connected to the paver (2), in particular the screed device (2) of the paver (3), and
- a power adjustment unit (12) that is configured for controlling the actual power output provided at the power output connector device (11) for heating the screed device (2) by connecting and disconnecting the power output connector device (11) and the power input connector device (10),
the method **characterized by** the steps:
- determining (1010) a maximum power input available at the power input connector device (10) provided by the remote electrical power source (4),
- determining (1020) a desired power output required at the power output connector device (11) for heating the screed device (2) of the paver (3), and
- controlling (1030) the power adjustment unit (12) to control the actual power output from the screed heating control device (1) for heating the screed device (2) of the paver (3) from the remote electrical power source (4) depending on the determined maximum power input and depending on the determined desired power output.

2. A method (1000) according to previous claim 1, wherein
- the actual power output provided at the power output connector device (11) is equal or less to the maximum power input available at the power input connector device (10) if the determined desired power output required at the power output connector device (11) is equal or less to the determined maximum power input available at the power input connector device (10).

3. A method (1000) according to any of the preceding claims 1 or 2, wherein
- the actual power output provided at the power output connector device (11) is equal to the determined desired power output (10) if the determined desired power output required at the power output connector device (11) is smaller than the determined maximum power input available at the power input connector device (10).

4. A method (1000) according to any of the preceding claims 1-3, wherein the step of controlling (1030) the actual power output from the screed heating control device (1) for heating the screed device (2) comprises:
- closing the power adjustment unit (12) for connecting the power input connector device (10) to the power output connector device (11), in particular for connecting the external electric power source (4) to the screed device (2) via the screed heating control device (1); and/or
- opening the power adjustment unit (12) for disconnecting the power input connector device (10) from the power output connector device (11), in particular for disconnecting the external electric power source (4) from the screed device (2) by means of the screed heating control device (1); and/or
- discrete or continuous adjustment of the power adjustment unit (12) for discrete or continuous adjustment of the actual output power to be provided to the screed device (2).

5. A method (1000) according to any of the preceding claims 1-4, wherein
- the power input connector device (10) of the screed heating control device (1) comprises one or more power input connector units (10a), wherein the one or more power input connector units (10a) are configured to be connected to one or more remote electrical power sources (4), and/or
- the power output connector device (11) of the screed heating control device (1) comprises one or more power output connector units (11a), wherein the one or more power output connector units (11a) are configured to be connected to one or more screed units of the screed device (2) of the paver (3),
wherein the step of controlling (1030) the actual power output from the screed heating control device (1) for heating the screed device (2) comprises:
- closing the power adjustment unit (12) for connecting the one or more power input connector units (12a) of the power input connector device (10) to the one or more power output connector units (12a) of the power output connector device (11), in particular for connecting the external electric power source (4) to the screed device (2) via the screed heating control device (1); and/or
- opening the power adjustment unit (12) for disconnecting the one or more power input connector units (10a) of the power input connector device (10) from the one or more power output connector units (11a) of the power output connector device (11), in particular for disconnecting the external electric power source (4) from the screed device (2) by means of the screed heating control device (1); and/or
- discrete or continuous adjustment of the power adjustment unit (12) for discrete or continuous adjustment of the actual output power to be provided to one or more screed units (2a) of the screed device (2).

6. A method (1000) according to any of the preceding claims 1-5, wherein
the screed heating control device (1) comprises a timer device (13) and/or a temperature sensor (22) and/or power consumption detector (23), wherein the screed heating control device (1) is adapted to control the actual power output from the screed heating control device (1) for heating the screed device (2) of the paver (3) from the remote electrical power source (4) depending on
- a desired heating start time of the screed device (2), and/or
- a desired heating finish time of the screed device (2), and/or
- a desired heating duration of the screed device (2), and/or
- a desired heating temperature of the screed device (2), and/or
- a desired power consumption of the screed device (2),
wherein the step of closing the power adjustment unit (12) is initiated if the desired heating start time is reached, and/or
wherein the step of opening the power adjustment unit (12) is initiated if the desired heating finish time and/or desired heating duration and/or desired heating temperature and/or desired power consumption is reached.

7. A method (1000) according to any of the preceding claims 1-6, wherein the timer device (13) comprises several timer units (13a) that are adapted to control the actual power output from the screed heating control device (1) for heating the screed units (2a) of the screed device (2) of the paver (3) from the remote electrical power source (4) depending on
- a desired heating start time of each screed unit (2a) of the screed device (2), and/or
- a desired heating finish time of each screed unit (2a) of the screed device (2), and/or
- a desired heating duration of each screed unit (2a) of the screed device (2),
wherein the step of closing the power adjustment unit (12) is initiated with respect to the screed units (2a) of the screed device (2) of which the desired heating time is reached, and/or
wherein the step of opening the power adjustment unit (12) is initiated with respect to the screed units (2a) of the screed device (2) of which the desired heating finish time and/or desired heating duration is reached.

8. Control unit (15) for controlling an actual power output from a screed heating control device (1) to a screed device (2) of a paver (3) from a remote electrical power source (4), wherein the control unit (15) is configured to perform the steps of the method according to any one of the preceding claims 1-7.

9. A computer program comprising program code means for performing the steps of the method according to any one of the preceding claims 1-7 when said program is run on the control unit (15) according to previous claim 8.

10. A computer readable medium carrying a computer program comprising program code means for performing the steps of the method according to any one of the preceding claims 1-7 when said program product is run on the control unit (15) according to previous claim 8.

11. A screed heating control device (1) for controlling an actual power output for heating a screed device (2) of a paver (3), the screed heating control device (1) comprising:
- a power input connector device (10) that is configured to be connected to a remote electrical power source (4),
- a power output connector device (11) that is configured to be connected to the paver (2), in particular the screed device (2) of the paver (3), and
- a power adjustment unit (12) that is configured for controlling the actual power output for heating the screed device (2) provided at the power output connector device (11) by connecting and disconnecting the power output connector device (11) and the power input connector device (10),
**characterized by**
- a control unit (15) according to claim 8 that is signal coupled with the power adjustment unit (12), and/or
- a timer device (13) that is adapted to control the actual power output from the screed heating control device (1) for heating the screed device (2) of the paver (3) from the remote electrical power source (4) depending on
∘ a desired heating start time of the screed device (2), and/or
∘ a desired heating finish time of the screed device (2), and/or
∘ a desired heating duration of the screed device (2).

12. A screed heating control device (1) according to preceding claim 11, wherein the power adjustment unit (12) comprises a thyristor unit (16), wherein preferably the thyristor unit (16) comprises two thyristors (16a, 16b) connected in parallel, wherein further preferably the two thyristors (16a, 16b) are connected antiparallel and/or a TRIAC-unit.

13. A screed heating control device according to any of the preceding claims 11 or 12, wherein the power adjustment unit (12) comprises an inductance unit (17), wherein preferably the inductance unit (17) is connected in series with the thyristor unit (16), wherein further preferably the inductance unit (17) is arranged between the power input connector device (10) and the thyristor unit (16).

14. A screed heating control device (1) according to any of the preceding claims 11-13, comprising a remote electrical power source (4), wherein preferably the remote electrical power source (4) is connected to the power input connector device (10).

15. A screed heating control device (1) according to any of the preceding claims 11-14, wherein
the control unit (15) is signal coupled with the screed device (2) and/or the remote electrical power source (4), wherein
preferably the control unit (15) is configured to communicate, in particular bi-directional communicate, with the screed device (2) and/or the remote electrical power source (4) to control the actual power output for heating the screed device (2),
in particular the control unit (15) is configured to determine a maximum power input available at the power input connector device (10) provided by the remote electrical power source (4), and to determine a desired power output required at the power output connector device (11) for heating the screed device (2) of the paver (3).

16. A screed heating control device (1) according to any of the preceding claims 11-15, comprising at least one temperature sensor (22) to detect a current temperature of the screed device, in particular of the screed units of the screed device, and/or power consumption detector (23) to detect a current power consumption of the screed device, in particular of the screed units of the screed device.

17. A paver (3), comprising:
- a screed heating control device (1) according to any of the preceding claims 11-16 that is configured for heating a screed device (2) of a paver (3), and
- the screed device (2) that is coupled to the screed heating control device (1).

18. A paver (3) according to previous claim 17, comprising a remote electrical power source (4), and/or wherein the screed device (2) comprises a screed element (20) and a heating element (21) to heat the screed element (20) depending on the actual power output.

19. A paver (3) according to any of the preceding claims 17 or 18, wherein the power input connector device (10) of the screed heating control device (1) is connected to the remote electrical power source (4) and/orthe power output connector device (11) of the screed heating control device (1) is connected to the screed device (2).

20. Paver (3) according to any of the preceding claims 17-19, wherein the screed heating control device (1) and the remote electrical power source (4) and/or the screed heating control device (1) and the paver (3) are electrically coupled via one or more cables for heating the screed device (2) of the paver (3),
- wherein the coupling between the cables and the screed heating control device (1) and/or the remote electrical power source (4) and/or paver (3) is locked while heating the screed device (2), in particular one or more of the screed units (2a), of the paver (3), and/or
- while heating the screed device (2), in particular one or more of the screed units (2a), the paver (3) is adapted to inhibit driving of the paver (3) and/or the paver (3) is adapted to provide signals, in particular visual and/or acoustical signals, indicating that the screed device (2) is being heated.

## Patentansprüche

1. Verfahren (1000) zum Steuern der tatsächlichen Leistungsabgabe einer Bohlenheizungs-Steuereinrichtung (1) zum Beheizen einer Bohleneinrichtung (2) eines Straßenfertigers (3),
die eine Bohlenheizungs-Steuereinrichtung (1) umfasst:
- eine Stromeingangsverbindungsvorrichtung (10), die so konfiguriert ist, dass sie an eine entfernte elektrische Stromquelle (4) angeschlossen werden kann,
- eine Leistungsabgabe-Anschlussvorrichtung (11), die zum Anschluss an den Straßenfertiger (2), insbesondere an die Bohleneinrichtung (2) des Straßenfertigers (3), ausgebildet ist, und
- eine Leistungseinstelleinheit (12), die so konfiguriert ist, dass sie die tatsächliche Leistungsabgabe steuert, die an der Leistungsabgabe-Anschlussvorrichtung (11) zum Beheizen der Bohleneinrichtung (2) bereitgestellt wird, indem sie die Leistungsabgabe-Anschlussvorrichtung (11) und die Leistungsaufnahme-Anschlussvorrichtung (10) verbindet und trennt,
das Verfahren **gekennzeichnet durch** die Schritte:
- Bestimmen (1010) einer maximalen Leistungsaufnahme, die an der von der entfernten elektrischen Stromquelle (4) bereitgestellten Stromeingangsverbindungsvorrichtung (10) verfügbar ist,
- Bestimmen (1020) einer gewünschten Leistungsabgabe, die an der Leistungsabgabe-Anschlussvorrichtung (11) zum Beheizen der Bohleneinrichtung (2) des Straßenfertigers (3) erforderlich ist, und
- Steuern (1030) der Leistungseinstelleinheit (12), um die tatsächliche Leistungsabgabe der Bohlenheizungs-Steuereinrichtung (1) zum Beheizen der Bohleneinrichtung (2) des Straßenfertigers (3) von der entfernten elektrischen Stromquelle (4) in Abhängigkeit von der ermittelten maximalen Leistungsaufnahme und in Abhängigkeit von der ermittelten gewünschten Leistungsabgabe zu steuern.

2. Verfahren (1000) nach dem vorhergehenden Anspruch 1, wobei
- die an der Leistungsausgangsanschlussvorrichtung (11) bereitgestellte tatsächliche Leistungsabgabe gleich oder kleiner als die an der Leistungseingangsanschlussvorrichtung (10) verfügbare maximale Leistungsaufnahme ist, wenn die an der Leistungsausgangsanschlussvorrichtung (11) erforderliche ermittelte gewünschte Leistungsabgabe gleich oder kleiner als die an der Leistungseingangsanschlussvorrichtung (10) verfügbare ermittelte maximale Leistungsaufnahme ist.

3. Verfahren (1000) nach einem der vorangehenden Ansprüche 1 oder 2, wobei
- die an der Leistungsabgabe-Anschlussvorrichtung (11) bereitgestellte Ist-Leistung gleich der ermittelten Soll-Leistung (10) ist, wenn die ermittelte Soll-Leistung, die an der Leistungsabgabe-Anschlussvorrichtung (11) benötigt wird, kleiner ist als die ermittelte maximale Leistungsaufnahme, die an der Leistungsaufnahme-Anschlussvorrichtung (10) verfügbar ist.

4. Verfahren (1000) nach einem der vorhergehenden Ansprüche 1 bis 3, wobei der Schritt des Steuerns (1030) der tatsächlichen Leistungsabgabe von der Bohlenheizungs-Steuereinrichtung (1) zum Beheizen der Bohleneinrichtung (2) umfasst:
- Schließen der Leistungsanpassungseinheit (12) zum Verbinden der Leistungseingangsanschlussvorrichtung (10) mit der Leistungsausgangsanschlussvorrichtung (11), insbesondere zum Verbinden der externen Stromquelle (4) mit der Bohleneinrichtung (2) über die Bohlenheizungs-Steuereinrichtung (1); und/oder
- Öffnen der Leistungsverstelleinheit (12) zum Trennen der Leistungseingangs-Anschlusseinrichtung (10) von der Leistungsausgangs-Anschlusseinrichtung (11), insbesondere zum Trennen der externen Stromquelle (4) von der Bohleneinrichtung (2) mittels der Bohlenheizungs-Steuereinrichtung (1); und/oder
- diskrete oder kontinuierliche Einstellung der Leistungseinstelleinheit (12) zur diskreten oder kontinuierlichen Einstellung der tatsächlichen Ausgangsleistung, die der Bohleneinrichtung (2) zugeführt werden soll.

5. Verfahren (1000) nach einem der vorangehenden Ansprüche 1-4, wobei
- die Stromeingangsanschlussvorrichtung (10) der Bohlenheizungs-Steuereinrichtung (1) eine oder mehrere Stromeingangsanschlusseinheiten (10a) umfasst, wobei die eine oder mehreren Stromeingangsanschlusseinheiten (10a) so konfiguriert sind, dass sie mit einer oder mehreren entfernten elektrischen Stromquellen (4) verbunden werden können, und/oder
- die Leistungsabgabeanschlussvorrichtung (11) der Bohlenheizungs-Steuereinrichtung (1) eine oder mehrere Leistungsabgabeanschlusseinheiten (11a) umfasst, wobei die eine oder mehreren Leistungsabgabeanschlusseinheiten (11a) so konfiguriert sind, dass sie mit einer oder mehreren Bohleneinheiten der Bohleneinrichtung (2) des Straßenfertigers (3) verbunden werden,
wobei der Schritt des Steuerns (1030) der tatsächlichen Leistungsabgabe von der Bohlenheizungs-Steuereinrichtung (1) zum Beheizen der Bohleneinrichtung (2) umfasst:
- Schließen der Leistungsanpassungseinheit (12) zum Verbinden der einen oder mehreren Leistungseingangsanschlusseinheiten (12a) der Leistungseingangsanschlussvorrichtung (10) mit der einen oder mehreren Leistungsausgangsanschlusseinheiten (12a) der Leistungsausgangsanschlussvorrichtung (11), insbesondere zum Verbinden der externen elektrischen Leistungsquelle (4) mit der Bohleneinrichtung (2) über die Bohlenheizungs-Steuereinrichtung (1); und/oder
- Öffnen der Leistungsanpassungseinheit (12) zum Trennen der einen oder mehreren Leistungseingangsanschlusseinheiten (10a) der Leistungseingangsanschlussvorrichtung (10) von der einen oder mehreren Leistungsausgangsanschlusseinheiten (11a) der Leistungsausgangsanschlussvorrichtung (11), insbesondere zum Trennen der externen elektrischen Leistungsquelle (4) von der Bohleneinrichtung (2) mittels der Bohlenheizungs-Steuereinrichtung (1); und/oder
- diskrete oder kontinuierliche Einstellung der Leistungseinstelleinheit (12) zur diskreten oder kontinuierlichen Einstellung der tatsächlichen Ausgangsleistung, die an eine oder mehrere Bohleneinheiten (2a) der Bohleneinrichtung (2) zu liefern ist.

6. Verfahren (1000) nach einem der vorangehenden Ansprüche 1-5, wobei
die Bohlenheizungs-Steuereinrichtung (1) eine Zeitsteuerungsvorrichtung (13) und/oder einen Temperatursensor (22) und/oder einen Leistungsverbrauchsdetektor (23) umfasst, wobei die Bohlenheizungs-Steuereinrichtung (1) so ausgelegt ist, dass sie die tatsächliche Leistungsabgabe der Bohlenheizungs-Steuereinrichtung (1) zum Beheizen der Bohleneinrichtung (2) des Straßenfertigers (3) von der entfernten elektrischen Stromquelle (4) in Abhängigkeit von
- eine gewünschte Aufheizzeit der Bohleneinrichtung (2), und/oder
- eine gewünschte Aufheizzeit der Bohleneinrichtung (2), und/oder
- eine gewünschte Heizdauer der Bohleneinrichtung (2), und/oder
- eine gewünschte Heiztemperatur der Bohleneinrichtung (2), und/oder
- eine gewünschte Leistungsaufnahme der Bohleneinrichtung (2),
wobei der Schritt des Schließens der Leistungsregulierungseinheit (12) eingeleitet wird, wenn die gewünschte Heizstartzeit erreicht ist, und/oder wobei der Schritt des Öffnens der Leistungseinstelleinheit (12) eingeleitet wird, wenn die gewünschte Heizendzeit und/oder die gewünschte Heizdauer und/oder die gewünschte Heiztemperatur und/oder die gewünschte Leistungsaufnahme erreicht ist.

7. Verfahren (1000) nach einem der vorhergehenden Ansprüche 1 bis 6, wobei die Zeitsteuerungsvorrichtung (13) mehrere Zeitsteuerungseinheiten (13a) umfasst, die geeignet sind, die tatsächliche Leistungsabgabe der Bohlenheizungs-Steuereinrichtung (1) zum Beheizen der Bohleneinheiten (2a) der Bohleneinrichtung (2) des Straßenfertigers (3) von der entfernten elektrischen Energiequelle (4) in Abhängigkeit von
- eine gewünschte Aufheizzeit jeder Bohlen-Einheit (2a) der Bohleneinrichtung (2), und/oder
- eine gewünschte Aufheizzeit jeder Bohlen-Einheit (2a) der Bohleneinrichtung (2), und/oder
- eine gewünschte Aufheizdauer jeder Bohlen-Einheit (2a) der Bohleneinrichtung (2),
wobei der Schritt des Schließens der Leistungsverstelleinheit (12) in Bezug auf die Bohlen-Einheit (2a) der Bohleneinrichtung(2) eingeleitet wird, bei denen die gewünschte Heizzeit erreicht ist, und/oder
wobei der Schritt des Öffnens der Leistungsverstelleinheit (12) in Bezug auf die Bohlen-Einheiten (2a) der Bohleneinrichtung(2) eingeleitet wird, deren gewünschte Aufheizzeit und/oder gewünschte Aufheizdauer erreicht ist.

8. Steuereinheit (15) zum Steuern einer tatsächlichen Leistungsabgabe von einer Bohlenheizungs-Steuereinrichtung (1) an eine Bohleneinrichtung (2) eines Stra-ßenfertigers (3) von einer entfernten elektrischen Energiequelle (4), wobei die Steuereinheit (15) konfiguriert ist, um die Schritte des Verfahrens nach einem der vorhergehenden Ansprüche 1-7 durchzuführen.

9. Computerprogramm mit Programmcodemitteln zur Durchführung der Schritte des Verfahrens nach einem der vorangehenden Ansprüche 1-7, wenn das Programm auf der Steuereinheit (15) nach dem vorhergehenden Anspruch 8 ausgeführt wird.

10. Computerlesbares Medium, das ein Computerprogramm enthält, das Programmcodemittel zum Ausführen der Schritte des Verfahrens nach einem der vorhergehenden Ansprüche 1-7 umfasst, wenn das Programmprodukt auf der Steuereinheit (15) gemäß dem vorhergehenden Anspruch 8 ausgeführt wird.

11. Bohlenheizungs-Steuereinrichtung (1) zum Steuern einer tatsächlichen Leistungsabgabe zum Beheizen einer Bohleneinrichtung(2) eines Straßenfertigers (3), wobei die Bohlenheizungs-Steuereinrichtung (1) umfasst:
- eine Stromeingangsverbindungsvorrichtung (10), die so konfiguriert ist, dass sie an eine entfernte elektrische Stromquelle (4) angeschlossen werden kann,
- eine Leistungsabgabe-Anschlussvorrichtung (11), die zum Anschluss an den Straßenfertiger (2), insbesondere an die Bohleneinrichtung (2) des Straßenfertigers (3), ausgebildet ist, und
- eine Leistungseinstelleinheit (12), die so konfiguriert ist, dass sie die tatsächliche Leistungsabgabe zum Beheizen der an der Leistungsabgabe-Anschlussvorrichtung (11) bereitgestellten Bohleneinrichtung (2) durch Verbinden und Trennen der Leistungsabgabe-Anschlussvorrichtung (11) und der Leistungsaufnahme-Anschlussvorrichtung (10) steuert,
**gekennzeichnet durch**
- eine Steuereinheit (15) nach Anspruch 8, die mit der Leistungsverstelleinheit (12) signalgekoppelt ist, und/oder
- eine Zeitsteuerungsvorrichtung (13), die so ausgelegt ist, dass sie die tatsächliche Leistungsabgabe der Bohlenheizungs-Steuereinrichtung (1) zum Beheizen der Bohleneinrichtung (2) des Straßenfertigers (3) von der entfernten elektrischen Energiequelle (4) in Abhängigkeit von
∘ eine gewünschte Aufheizzeit der Bohleneinrichtung (2), und/oder
∘ eine gewünschte Aufheizzeit der Bohleneinrichtung (2), und/oder
∘ eine gewünschte Heizdauer der Bohleneinrichtung (2).

12. Bohlenheizungs-Steuereinrichtung (1) nach dem vorhergehenden Anspruch 11, wobei die Leistungsregelungseinheit (12) eine Thyristoreinheit (16) umfasst, wobei vorzugsweise die Thyristoreinheit (16) zwei parallel geschaltete Thyristoren (16a, 16b) umfasst, wobei weiter vorzugsweise die beiden Thyristoren (16a, 16b) antiparallel geschaltet sind und/oder eine TRIAC-Einheit.

13. Bohlenheizungs-Steuereinrichtung nach einem der vorhergehenden Ansprüche 11 oder 12, wobei die Leistungseinstelleinheit (12) eine Induktivitätseinheit (17) aufweist, wobei vorzugsweise die Induktivitätseinheit (17) mit der Thyristoreinheit (16) in Reihe geschaltet ist, wobei weiter vorzugsweise die Induktivitätseinheit (17) zwischen der Leistungseingangs-Anschlusseinrichtung (10) und der Thyristoreinheit (16) angeordnet ist.

14. Bohlenheizungs-Steuereinrichtung (1) nach einem der vorhergehenden Ansprüche 11-13, mit einer elektrischen Fernspeisequelle (4), wobei vorzugsweise die elektrische Fernspeisequelle (4) mit der Stromeingangs-Anschlussvorrichtung (10) verbunden ist.

15. Bohlenheizungs-Steuereinrichtung (1) nach einem der vorhergehenden Ansprüche 11-14, wobei
die Steuereinheit (15) mit der Bohleneinrichtung (2) und/oder der entfernten elektrischen Energiequelle (4) signalgekoppelt ist, wobei
vorzugsweise ist die Steuereinheit (15) so konfiguriert, dass sie mit der Bohleneinrichtung (2) und/oder der entfernten elektrischen Energiequelle (4) kommuniziert, insbesondere bidirektional kommuniziert, um die tatsächliche Leistungsabgabe zur Beheizung der Bohleneinrichtung (2) zu steuern,
insbesondere ist die Steuereinheit (15) so konfiguriert, dass sie eine maximale Leistungsaufnahme bestimmt, die an der von der entfernten elektrischen Energiequelle (4) bereitgestellten Leistungseingangsanschlussvorrichtung (10) verfügbar ist, und dass sie eine gewünschte Leistungsabgabe bestimmt, die an der Leistungsausgangsanschlussvorrichtung (11) zum Beheizen der Bohleneinrichtung (2) des Straßenfertigers (3) erforderlich ist.

16. Bohlenheizungs-Steuereinrichtung (1) nach einem der vorhergehenden Ansprüche 11-15, umfassend mindestens einen Temperatursensor (22) zum Erfassen einer aktuellen Temperatur der Bohleneinrichtung, insbesondere der Estrichaggregate der Bohleneinrichtung, und/oder einen Leistungsaufnahme-Detektor (23) zum Erfassen einer aktuellen Leistungsaufnahme der Bohleneinrichtung, insbesondere der Estrichaggregate der Bohleneinrichtung.

17. Ein Straßenfertiger (3), bestehend aus:
- eine Bohlenheizungs-Steuereinrichtung (1) nach einem der vorhergehenden Ansprüche 11-16, die zum Beheizen einer Bohleneinrichtung (2) eines Straßenfertigers (3) ausgebildet ist, und
- die Bohleneinrichtung (2), die mit der Bohlenheizungs-Steuereinrichtung (1) gekoppelt ist.

18. Straßenfertiger (3) nach dem vorhergehenden Anspruch 17, mit einer ferngesteuerten elektrischen Energiequelle (4), und/oder wobei die Bohleneinrichtung (2) ein Bohlenelement (20) und ein Heizelement (21) zum Beheizen des Bohlenelements (20) in Abhängigkeit von der aktuellen Leistungsabgabe umfasst.

19. Straßenfertiger (3) nach einem der vorhergehenden Ansprüche 17 oder 18, wobei die Leistungseingangs-Anschlussvorrichtung (10) der Bohlenheizungs-Steuereinrichtung (1) mit der elektrischen Fernstromquelle (4) und/oder die Leistungsausgangs-Anschlussvorrichtung (11) der Bohlenheizungs-Steuereinrichtung (1) mit der Bohleneinrichtung (2) verbunden ist.

20. Straßenfertiger (3) nach einem der vorhergehenden Ansprüche 17-19, wobei die Bohlenheizungs-Steuereinrichtung (1) und die elektrische Fernspeisequelle (4) und/oder die Bohlenheizungs-Steuereinrichtung (1) und der Straßenfertiger (3) über ein oder mehrere Kabel zur Beheizung der Bohleneinrichtung (2) des Straßenfertigers (3) elektrisch gekoppelt sind,
- wobei die Kopplung zwischen den Kabeln und der Bohlenheizungs-Steuereinrichtung (1) und/oder der elektrischen Fernspeisequelle (4) und/oder dem Straßenfertiger (3) während der Beheizung der Bohleneinrichtung (2), insbesondere einer oder mehrerer Bohleneinheiten (2a), des Straßenfertigers (3) verriegelt ist, und/oder
- der Straßenfertiger (3) während des Aufheizens der Bohleneinrichtung (2), insbesondere einer oder mehrerer der Bohleneinheiten (2a), dazu eingerichtet ist, den Antrieb des Straßenfertigers (3) zu sperren und/oder der Straßenfertiger (3) dazu eingerichtet ist, Signale, insbesondere optische und/oder akustische Signale, abzugeben, die anzeigen, dass die Bohleneinrichtung (2) aufgeheizt wird.

## Revendications

1. Procédé (1000) pour commander une puissance réelle délivrée en sortie par un dispositif de commande de chauffage de table (1) pour chauffer un dispositif de table (2) d'un finisseur (3),
le dispositif de commande de chauffage de table (1) comprenant :
- un dispositif de connexion d'entrée de puissance (10) qui est configuré pour être connecté à une source d'alimentation électrique distante (4),
- un dispositif de connexion de sortie de puissance (11) qui est configuré pour être connecté au finisseur (2), en particulier au dispositif de table (2) du finisseur (3), et
- une unité de réglage de puissance (12) qui est configurée pour commander la sortie de puissance réelle fournie au niveau du dispositif de connexion de sortie de puissance (11) pour chauffer le dispositif de table (2) en connectant et en déconnectant le dispositif de connexion de sortie de puissance (11) et le dispositif de connexion d'entrée de puissance (10),
le procédé étant **caractérisé par** les étapes de :
- détermination (1010) d'une entrée de puissance maximale disponible au niveau du dispositif de connexion d'entrée de puissance (10) fournie par la source d'alimentation électrique distante (4),
- détermination (1020) d'une sortie de puissance souhaitée requise au niveau du dispositif de connexion de sortie de puissance (11) pour chauffer le dispositif de table (2) du finisseur (3), et
- commande (1030) de l'unité de réglage de puissance (12) pour commander la puissance réelle délivrée en sortie par le dispositif de commande de chauffage de table (1) pour chauffer le dispositif de table (2) du finisseur (3) à partir de la source d'alimentation électrique distante (4) en fonction de l'entrée de puissance maximale déterminée et en fonction de la sortie de puissance souhaitée déterminée.

2. Procédé (1000) selon la revendication précédente 1, dans lequel
- la sortie de puissance réelle fournie au niveau du dispositif de connexion de sortie de puissance (11) est inférieure ou égale à l'entrée de puissance maximale disponible au niveau du dispositif de connexion d'entrée de puissance (10) si la sortie de puissance souhaitée déterminée requise au niveau du dispositif de connexion de sortie de puissance (11) est inférieure ou égale à l'entrée de puissance maximale déterminée disponible au niveau du dispositif de connexion d'entrée de puissance (10).

3. Procédé (1000) selon l'une des revendications précédentes 1 ou 2, dans lequel
- la sortie de puissance réelle fournie au dispositif de connexion de sortie de puissance (11) est égale à la sortie de puissance souhaitée déterminée (10) si la sortie de puissance souhaitée déterminée requise au niveau du dispositif de connexion de sortie de puissance (11) est inférieure à l'entrée de puissance maximale déterminée disponible au niveau du dispositif de connexion d'entrée de puissance (10).

4. Procédé (1000) selon l'une des revendications précédentes 1 à 3, dans lequel l'étape de commande (1030) de la puissance réelle délivrée en sortie par le dispositif de commande de chauffage de table (1) pour chauffer le dispositif de table (2) comprend :
- la fermeture de l'unité de réglage de puissance (12) pour connecter le dispositif de connexion d'entrée de puissance (10) au dispositif de connexion de sortie de puissance (11), en particulier pour connecter la source d'alimentation électrique externe (4) au dispositif de table (2) via le dispositif de commande de chauffage de table (1) ; et/ou
- l'ouverture de l'unité de réglage de puissance (12) pour déconnecter le dispositif de connexion d'entrée de puissance (10) du dispositif de connexion de sortie de puissance (11), en particulier pour déconnecter la source d'alimentation électrique externe (4) du dispositif de table (2) au moyen du dispositif de commande de chauffage de table (1) ; et/ou
- le réglage discret ou continu de l'unité de réglage de puissance (12) pour un réglage discret ou continu de la puissance de sortie réelle à fournir au dispositif de table (2).

5. Procédé (1000) selon l'une des revendications précédentes 1 à 4, dans lequel
- le dispositif de connexion d'entrée de puissance (10) du dispositif de commande de chauffage de table (1) comprend une ou plusieurs unités de connexion d'entrée de puissance (10a), dans lequel la ou les plusieurs unités de connexion d'entrée de puissance (10a) sont configurées pour être connectées à une ou plusieurs sources d'alimentation électrique distantes (4), et/ou
- le dispositif de connexion de sortie de puissance (11) du dispositif de commande de chauffage de table (1) comprend une ou plusieurs unités de connexion de sortie de puissance (11a), dans lequel la ou les plusieurs unités de connexion de sortie de puissance (11a) sont configurées pour être connectées à une ou plusieurs unités de table du dispositif de table (2) du finisseur (3),
dans lequel l'étape de commande (1030) de la puissance réelle délivrée en sortie par le dispositif de commande de chauffage de table (1) pour chauffer le dispositif de table (2) comprend :
- la fermeture de l'unité de réglage de puissance (12) pour connecter la ou les plusieurs unités de connexion d'entrée de puissance (12a) du dispositif de connexion d'entrée de puissance (10) à la ou aux plusieurs unités de connexion de sortie de puissance (12a) du dispositif de connexion de sortie de puissance (11), en particulier pour connecter la source d'alimentation électrique externe (4) au dispositif de table (2) via le dispositif de commande de chauffage de table (1) ; et/ou
- l'ouverture de l'unité de réglage de puissance (12) pour déconnecter la ou les plusieurs unités de connexion d'entrée de puissance (10a) du dispositif de connexion d'entrée de puissance (10) de la ou des plusieurs unités de connexion de sortie de puissance (11a) du dispositif de connexion de sortie de puissance (11), en particulier pour déconnecter la source d'alimentation électrique externe (4) du dispositif de table (2) au moyen du dispositif de commande de chauffage de table (1) ; et/ou
- le réglage discret ou continu de l'unité de réglage de puissance (12) pour un réglage discret ou continu de la puissance de sortie réelle à fournir à une ou plusieurs unités de table (2a) du dispositif de table (2).

6. Procédé (1000) selon l'une des revendications précédentes 1 à 5, dans lequel
le dispositif de commande de chauffage de table (1) comprend un dispositif de minuterie (13) et/ou un capteur de température (22) et/ou un détecteur de consommation de puissance (23), dans lequel le dispositif de commande de chauffage de table (1) est adapté pour commander la puissance réelle délivrée en sortie par le dispositif de commande de chauffage de table (1) pour chauffer le dispositif de table (2) du finisseur (3) à partir de la source d'alimentation électrique distante (4) en fonction de
- un temps de début de chauffage souhaité du dispositif de table (2), et/ou
- un temps de fin de chauffage souhaité du dispositif de table (2), et/ou
- une durée de chauffage souhaitée du dispositif de table (2), et/ou
- une température de chauffage souhaitée du dispositif de table (2), et/ou
- une consommation de puissance souhaitée du dispositif de table (2),
dans lequel l'étape de fermeture de l'unité de réglage de puissance (12) est initiée si le temps de début de chauffage souhaité est atteint, et/ou
dans lequel l'étape d'ouverture de l'unité de réglage de puissance (12) est initiée si le temps de fin de chauffage souhaité et/ou la durée de chauffage souhaitée et/ou la température de chauffage souhaitée et/ou la consommation de puissance souhaitée est atteint(e)/sont atteints.

7. Procédé (1000) selon l'une des revendications précédentes 1 à 6, dans lequel le dispositif de minuterie (13) comprend plusieurs unités de minuterie (13a) qui sont adaptées pour commander la puissance réelle délivrée en sortie par le dispositif de commande de chauffage de table (1) pour chauffer les unités de table (2a) du dispositif de table (2) du finisseur (3) à partir de la source d'alimentation électrique distante (4) en fonction de
- un temps de début de chauffage souhaité de chaque unité de table (2a) du dispositif de table (2), et/ou
- un temps de fin de chauffage souhaité de chaque unité de table (2a) du dispositif de table (2), et/ou
- une durée de chauffage souhaitée de chaque unité de table (2a) du dispositif de table (2),
dans lequel l'étape de fermeture de l'unité de réglage de puissance (12) est initiée pour les unités de table (2a) du dispositif de table (2) dont le temps de chauffage souhaité est atteint, et/ou
dans lequel l'étape d'ouverture de l'unité de réglage de puissance (12) est initiée pour les unités de table (2a) du dispositif de table (2) dont le temps de fin de chauffage souhaité et/ou la durée de chauffage souhaitée est atteint(e)/sont atteints.

8. Unité de commande (15) pour commander une puissance réelle délivrée en sortie par un dispositif de commande de chauffage de table (1) à un dispositif de table (2) d'un finisseur (3) à partir d'une source d'alimentation électrique distante (4), dans laquelle l'unité de commande (15) est configurée pour effectuer les étapes du procédé selon l'une quelconque des revendications précédentes 1 à 7.

9. Programme informatique comprenant des moyens de code de programme pour effectuer les étapes du procédé selon l'une quelconque des revendications précédentes 1 à 7 lorsque ledit programme est exécuté sur l'unité de commande (15) selon la revendication précédente 8.

10. Support lisible par ordinateur portant un programme informatique comprenant des moyens de code de programme pour effectuer les étapes du procédé selon l'une quelconque des revendications précédentes 1 à 7 lorsque ledit produit de programme est exécuté sur l'unité de commande (15) selon la revendication précédente 8.

11. Dispositif de commande de chauffage de table (1) pour commander une sortie de puissance réelle pour chauffer un dispositif de table (2) d'un finisseur (3), le dispositif de commande de chauffage de table (1) comprenant :
- un dispositif de connexion d'entrée de puissance (10) qui est configuré pour être connecté à une source d'alimentation électrique distante (4),
- un dispositif de connexion de sortie de puissance (11) qui est configuré pour être connecté au finisseur (2), en particulier au dispositif de table (2) du finisseur (3), et
- une unité de réglage de puissance (12) qui est configurée pour commander la sortie de puissance réelle pour chauffer le dispositif de table (2) fournie au niveau du dispositif de connexion de sortie de puissance (11) en connectant et en déconnectant le dispositif de connexion de sortie de puissance (11) et le dispositif de connexion d'entrée de puissance (10),
**caractérisé par**
- une unité de commande (15) selon la revendication 8 qui est couplée par signal à l'unité de réglage de puissance (12), et/ou
- un dispositif de minuterie (13) qui est adapté pour commander la puissance réelle délivrée en sortie par le dispositif de commande de chauffage de table (1) pour chauffer le dispositif de table (2) du finisseur (3) à partir de la source d'alimentation électrique distante (4) en fonction de
∘ un temps de début de chauffage souhaité du dispositif de table (2), et/ou
∘ un temps de fin de chauffage souhaité du dispositif de table (2), et/ou
∘ une durée de chauffage souhaitée du dispositif de table (2).

12. Dispositif de commande de chauffage de table (1) selon la revendication précédente 11, dans lequel l'unité de réglage de puissance (12) comprend une unité à thyristors (16), dans lequel de préférence l'unité à thyristors (16) comprend deux thyristors (16a, 16b) connectés en parallèle, dans lequel, de préférence encore, les deux thyristors (16a, 16b) sont connectés de manière antiparallèle et/ou une unité TRIAC.

13. Dispositif de commande de chauffage de table selon l'une des revendications précédentes 11 ou 12, dans lequel l'unité de réglage de puissance (12) comprend une unité d'inductance (17), dans lequel de préférence l'unité d'inductance (17) est connectée en série avec l'unité à thyristors (16), dans lequel, de préférence encore, l'unité d'inductance (17) est agencée entre le dispositif de connexion d'entrée de puissance (10) et l'unité à thyristors (16).

14. Dispositif de commande de chauffage de table (1) selon l'une des revendications précédentes 11 à 13, comprenant une source d'alimentation électrique distante (4), dans lequel, de préférence, la source d'alimentation électrique distante (4) est connectée au dispositif de connexion d'entrée de puissance (10).

15. Dispositif de commande de chauffage de table (1) selon l'une des revendications précédentes 11 à 14, dans lequel
l'unité de commande (15) est couplée par signal au dispositif de table (2) et/ou à la source d'alimentation électrique distante (4), dans lequel
de préférence, l'unité de commande (15) est configurée pour communiquer, en particulier de manière bidirectionnelle, avec le dispositif de table (2) et/ou la source d'alimentation électrique distante (4) afin de commander la sortie de puissance réelle pour chauffer le dispositif de table (2),
en particulier, l'unité de commande (15) est configurée pour déterminer une entrée de puissance maximale disponible au niveau du dispositif de connexion d'entrée de puissance (10) fournie par la source d'alimentation électrique distante (4), et pour déterminer une sortie de puissance souhaitée requise au niveau du dispositif de connexion de sortie de puissance (11) pour chauffer le dispositif de table (2) du finisseur (3).

16. Dispositif de commande de chauffage de table (1) selon l'une des revendications précédentes 11 à 15, comprenant au moins un capteur de température (22) pour détecter une température actuelle du dispositif de table, en particulier des unités de table du dispositif de table, et/ou un détecteur de consommation de puissance (23) pour détecter une consommation de puissance actuelle du dispositif de table, en particulier des unités de table du dispositif de table.

17. Finisseur (3), comprenant :
- un dispositif de commande de chauffage de table (1) selon l'une des revendications précédentes 11 à 16, qui est configuré pour chauffer un dispositif de table (2) d'un finisseur (3), et
- le dispositif de table (2) qui est couplé au dispositif de commande de chauffage de table (1).

18. Finisseur (3) selon la revendication précédente 17, comprenant une source d'alimentation électrique distante (4), et/ou dans lequel le dispositif de table (2) comprend un élément de table (20) et un élément chauffant (21) pour chauffer l'élément de table (20) en fonction de la sortie de puissance réelle.

19. Finisseur (3) selon l'une des revendications précédentes 17 ou 18, dans lequel le dispositif de connexion d'entrée de puissance (10) du dispositif de commande de chauffage de table (1) est connecté à la source d'alimentation électrique distante (4) et/ou le dispositif de connexion de sortie de puissance (11) du dispositif de commande de chauffage de table (1) est connecté au dispositif de table (2).

20. Finisseur (3) selon l'une des revendications précédentes 17 à 19, dans lequel le dispositif de commande de chauffage de table (1) et la source d'alimentation électrique distante (4) et/ou le dispositif de commande de chauffage de table (1) et le finisseur (3) sont couplés électriquement via un ou plusieurs câbles pour chauffer le dispositif de table (2) du finisseur (3),
- dans lequel le couplage entre les câbles et le dispositif de commande de chauffage de table (1) et/ou la source d'alimentation électrique distante (4) et/ou le finisseur (3) est verrouillé pendant le chauffage du dispositif de table (2), en particulier d'une ou plusieurs des unités de table (2a), du finisseur (3), et/ou
- lors du chauffage du dispositif de table (2), en particulier d'une ou plusieurs des unités de table (2a), le finisseur (3) est adapté pour empêcher l'entraînement du finisseur (3) et/ou le finisseur (3) est adapté pour fournir des signaux, en particulier des signaux visuels et/ou acoustiques, indiquant que le dispositif de table (2) est en train d'être chauffé.
